# FASCICULE DE BREVET EUROPEEN

(11) **EP 0 678 490 B1**
(45) Date de publication et mention de la délivrance du brevet: **07.07.1999**
(21) Numéro de dépôt: 95105589.6
(22) Date de dépôt: 13.04.1995
(51) Int. Cl.: C04B 35/486, G04B 37/22

(54) **Procédé de fabrication d'un article noir à base de zircone et article décoratif noir à base de zircone notamment obtenu selon ce procédé**
Verfahren zur Herstellung eines schwarzen Gegenstandes basierend auf Zirkoniumdioxid, ein dekorativer, schwarzer Gegenstand daraus, hergestellt nach diesem Verfahren
Process of manufacture of a zirconia-based black article and a decorative black zirconia-based article obtained by this process

(30) Priorité: 19.04.1994 CH 118294
(43) Date de publication de la demande: 25.10.1995
(73) Titulaire: ASULAB S.A., CH-2501 Bienne (CH)
(72) Inventeur: Briod, Renaud, CH-1400 Yverdon (CH)
(74) Mandataire: de Montmollin, Henri

(56) Documents cités:
- GB-A- 2 132 600
- DATABASE WPI Week 8836, Derwent Publications Ltd., London, GB; AN 88-254387 & JP-A-63 185 855 (NIPPON CEMENT KK) 1 Août 1988
- PATENT ABSTRACTS OF JAPAN vol. 016, no. 362 (C-0971) 5 Août 1992 & JP-A-04 114 964 (NIPPON SODA CO. LTD.) 15 Avril 1992

## Description

L'invention concerne un procédé de fabrication d'un article noir à base de zircone et un article décoratif noir à base de zircone notamment obtenu selon ce procédé.

Le brevet CH 654 770 décrit déjà un procédé de fabrication d'un article noir à base de zircone. Selon ce procédé, on fritte un élément mis en forme constitué d'une matrice composée principalement de zircone contenant au moins un stabilisant choisi parmi l'ensemble des oxydes comprenant l'oxyde d'yttrium, l'oxyde de magnésium, l'oxyde de cérium et l'oxyde de calcium à une température de 1'400 à 1'600°C dans une atmosphère non oxydante pour que ledit élément fritté noircisse. L'élément fritté est alors poli.

Ce procédé présente l'inconvénient majeur de devoir être mis en oeuvre dans une installation comprenant un four travaillant dans une atmosphère non oxydante. En effet, de telles installations sont coûteuses et augmentent ainsi le prix de revient des articles fabriqués dans ces dernières. De plus, toutes les entreprises travaillant dans le domaine des matériaux céramiques ne sont pas nécessairement équipées de telles installations.

On connaît également du document JP-A-63 185 855 un procédé de fabrication d'articles décoratifs noirs à base de zircone et d'alumine consistant à mélanger de la zircone partiellement stabilisée à l'alumine et à un ensemble de pigments comprenant du Cr2O3, Co3O4, NiO, Fe203, MnO2 et du carbone colloïdal, à mouler, à fritter les articles à l'air à une température comprise entre 1'300 et 1'600°C et enfin à polir l'article fritté.

On connaît en outre du document JP-A-04 114 964 un procédé de fabrication d'une pièce noire en zircone utilisant au moins un pigment choisi parmi le CoO, CrO3, FeO3 et le TiO2.

L'invention a donc pour but principal de fournir d'une part un procédé de fabrication d'un article noire à base de zircone pouvant être mis en oeuvre dans une installation fonctionnant sous air et d'autre part un article noir à base de zircone qui, tout en ayant des propriétés mécaniques satisfaisantes, présente une coloration noire profonde et un brillant intense particulièrement adapté à la réalisation d'articles décoratifs.

A cet effet, l'invention a pour objet un procédé de fabrication d'un article noir à base de zircone, tel que défini par la revendication 1 du brevet.

Ce procédé présente l'avantage principal par rapport au procédé de l'art antérieur de mettre en oeuvre des fours conventionnels fonctionnant sous air généralement disponibles dans l'industrie. De plus, dans le cas de l'utilisation d'un pigment à base d'oxyde de cobalt et d'oxyde de fer, en frittant à une température relativement basse (inférieure à 1'400°C) - que l'on peut obtenir à l'aide de fours moins chers que ceux nécessaires pour obtenir des températures plus élevées - on diminue la quantité d'énergie nécessaire au frittage des articles et par conséquent le prix de revient des articles fabriqués selon ce procédé. D'autre part, la couleur noire obtenue ne présente pas de nuance verte comme c'est souvent le cas des articles en zircone noire comprenant des pigments à base d'oxyde de chrome et/ou d'oxyde de nickel.

L'invention a également pour objet un article décoratif noir à base de zircone tel que défini par la revendication 7 du brevet.

D'autres caractéristiques et avantages de l'invention apparaîtront à la lumière de la description qui suit d'un exemple de réalisation du procédé.

Le procédé de fabrication de l'invention qui va maintenant être décrit en détail est celui qui permet de réaliser un article en zircone noire dont l'aspect et les propriétés mécaniques sont particulièrement adaptés à la réalisation de pièces constitutives de montres bracelets ou à la réalisation de tout autre article décoratif.

L'article en zircone noire obtenu selon ce procédé, contient 99 à 90% en poids de zircone stabilisée et le complément en poids, c'est a dire 1 à 10%, d'un mélange d'oxyde de cobalt et d'oxyde de fer, la proportion de ce complément étant comprise de préférence entre 2 et 5%.

La zircone est stabilisée de façon classique en phase tétragonale par au moins un stabilisant choisi parmi l'ensemble des oxydes comprenant l'oxyde d'yttrium, l'oxyde de magnésium, l'oxyde de cérium et l'oxyde de calcium, ce stabilisant étant en quantité de 3 à 70% en poids par rapport à la zircone.

Selon des variantes de l'invention, le mélange d'oxydes de cobalt et de fer peut être remplacé par une poudre de spinelle CoFe₂O₄.

Pour réaliser cet article, on procède selon un exemple de mise en oeuvre du procédé de l'invention de la façon suivante :

On pèse 950 g de poudre de zircone stabilisée à 5,3% en poids d'oxyde d'yttrium. La poudre utilisée a une taille granulométrique moyenne de l'ordre du micromètre, typiquement de 0,3 micromètre, et elle est vendue sous le nom TZ-3Y par la société Tosoh Corp., Japon.

On pèse ensuite 18,2 g d'une poudre d'oxyde de cobalt, ayant une taille granulométrique moyenne de l'ordre du micromètre, vendue chez Riedel de Haen, Allemagne.

On pèse enfin 31,8 g d'une poudre d'oxyde de fer, ayant une taille granulométrique moyenne de l'ordre du micromètre, vendue chez Riedel de Haen, Allemagne.

Dans cet exemple, l'oxyde de cobalt représente 36,4% en poids du mélange des oxydes métalliques, mais il est bien entendu que selon des variantes de réalisation du procédé de l'invention, cette proportion d'oxyde de cobalt peut varier dans une gamme comprise entre 25 et 50% du mélange des oxydes métalliques formant le pigment et de préférence dans une gamme comprise entre 32 et 38%.

On notera que toutes ces poudres doivent de préférence présenter une pureté supérieure à 99,5%.

Une fois le pesage des poudres terminé, ces poudres sont mélangées et homogénéisées en milieu humide.

Dans la phase finale d'homogénéisation, on ajoute environ 50 g d'un liant, par exemple un alcool polyvinylique.

On procède ensuite au séchage du mélange par exemple dans un atomiseur classique.

Le granulé obtenu est tamisé à 315 micromètres.

Le granulé tamisé est pressé dans un moule ayant la configuration de l'article que l'on désire obtenir afin de former une ébauche de ce dernier.

L'article ayant sa forme générale quasi finale est placé dans un four de frittage sous air. L'article est chauffé dans une première phase, à une vitesse de 30°C/h, jusqu'à environ 1'000°C, puis dans une deuxième phase à une vitesse de 50°C/h jusqu'à 1'350°C et est maintenu à la température de 1'350°C pendant au moins 30 minutes et de préférence pendant une heure.

On notera que le frittage peut bien entendu être effectué à toute autre température supérieure ou égale à 1'100°C et inférieure à 1'400°C.

On veillera lorsque l'on utilise un pigment à base d'oxyde de cobalt et d'oxyde de fer à ne pas dépasser une température voisine de 1'400°C lors du frittage de l'article car cela conduirait à une détérioration des propriétés mécaniques du produit final.

L'article est alors refroidi, puis usiné afin d'obtenir une forme adaptée à son utilisation finale.

Enfin, l'article est poli, par exemple, à l'aide d'une pâte de diamant. L'article ainsi obtenu a un aspect noir et brillant de sorte qu'il présente des caractéristiques esthétiques attractives.

Selon une variante du procédé de fabrication de l'invention, on met en oeuvre les mêmes étapes que celles décrites dans l'exemple ci-dessus en remplaçant l'oxyde de fer et l'oxyde de cobalt par une quantité équivalente de spinelle CoFe₂O₄. Dans ce cas, la température de frittage peut être portée à 1'600°C sans que cela ne soit indispensable pour la réalisation de l'article décoratif noir à base de zircone selon l'invention.

## Revendications

1. Procédé de fabrication de pièces constitutives de montres-bracelets noires à base de zircone, caractérisé en ce qu'il comprend les étapes successives consistant à réaliser un premier mélange comprenant une poudre de zircone, 3 à 70% en poids d'un stabilisant choisi parmi l'ensemble des oxydes comprenant l'oxyde d'yttrium, l'oxyde de magnésium , l'oxyde de cérium et l'oxyde de calcium, 1% à 10% en poids d'un pigment choisi parmi l'ensemble formé d'une part par une poudre d'oxyde de cobalt et d'oxyde de fer et d'autre part par une poudre de spinelle CoFe₂O₄ à l'exclusion de tout autre pigment, réaliser un deuxième mélange comprenant ledit premier mélange et un liant, réaliser un mélange granulé en opérant une granulation dudit deuxième mélange, former une ébauche en conférant à ce deuxième mélange granulé la forme de l'article désiré, fritter sous air ladite ébauche pendant au moins 30 minutes à une température inférieure à 1'400°C lorsque ledit pigment est une poudre d'oxyde de cobalt et d'oxyde de fer et inférieure à 1'600°C lorsque le pigment est une poudre de spinelle CoFe₂O₄ et polir ladite ébauche frittée.

2. Procédé de fabrication selon la revendication 1 caractérisé en ce que ledit premier mélange comprend 2 à 5% en poids dudit pigment.

3. Procédé de fabrication selon la revendication 2 caractérisé en ce que le pigment est constitué d'oxyde de cobalt et d'oxyde de fer et comporte 25 à 50% et de préférence de 32 à 38% d'oxyde de cobalt.

4. Procédé de fabrication selon la revendication 2 caractérisé en ce que le pigment est constitué d'une poudre de spinelle CoFe₂O₄.

5. Procédé de fabrication selon l'une quelconque des revendications précédentes, caractérisé en ce que le stabilisant est l'oxyde d'yttrium.

6. Procédé de fabrication selon l'une quelconque des revendications précédentes, caractérisé en ce que la température de frittage est égale ou supérieure à 1'100°C et de préférence comprise entre 1'300 et 1'400°C.

7. Pièce constitutive de montre-bracelet noire à base de zircone caractérisée en ce qu'il est constitué d'une pièce frittée à partir d'une pièce moulée comprenant en substance une matrice d'oxyde de zirconium, 3 à 70% en poids d'au moins un stabilisant choisi parmi l'ensemble des oxydes comprenant l'oxyde d'yttrium, l'oxyde de magnésium, l'oxyde de cérium et l'oxyde de calcium, et un pigment constitué d'une poudre d'oxyde de cobalt et d'oxyde de fer, ou d'une poudre de spinelle CoFe₂O₄ à l'exclusion de tout autre pigment, ledit pigment représentant 1 à 10% en poids.

8. Pièce noire à base de zircone selon la revendication 7 caractérisée en ce qu'il comprend entre 2 et 5% d'oxyde de cobalt et d'oxyde de fer, ou de poudre de spinelle CoFe₂O₄.

9. Pièce noire à base de zircone selon la revendication 7 ou 8 caractérisée en ce qu'elle est obtenue selon l'une quelconque des revendications 1 à 6.

## Claims

1. Method of manufacturing black zirconia-based wristwatch constitutive parts, characterized in that it includes successive steps consisting of: producing a first mixture comprising a zirconia powder, 3 to 70% by weight of a stabiliser selected from the group of oxides comprising yttrium oxide, magnesium oxide, cerium oxide and calcium oxide, 1% to 10% by weight of a pigment selected from the group formed on the one hand by a cobalt oxide and iron oxide powder and on the other hand, by a spinel CoFe₂O₄ powder to the exclusion of any other pigments, producing a second mixture comprising said first mixture and a binder; producing a granulated mixture by granulating said second mixture; forming a rough model by giving said second granulated mixture the shape of the desired article; sintering in air for at least 30 minutes at a temperature less than 1,400°C when said pigment is a cobalt oxide and iron oxide powder and less than 1,600°C when the pigment is a spinel CoFe₂O₄ powder; and polishing said sintering said rough model.

2. Manufacturing method according to claim 1 characterized in that said first mixture comprises 2 to 5% by weight of said pigment.

3. Manufacturing method according to claim 2 characterized in that the pigment is formed by cobalt oxide and iron oxide and comprises between 25 and 50% and preferably 32 to 38% of cobalt oxide.

4. Manufacturing method according to claim 2 characterized in that the pigment is formed by a spinel CoFe₂O₄ powder.

5. Manufacturing method according to any one of the preceding claims, characterized in that the stabiliser is yttrium oxide.

6. Manufacturing method according to any one of the preceding claims, characterized in that the sintering temperature is equal to or greater than 1,100°C and preferably between 1,300 and 1,400°C.

7. Black zirconia-based wristwatch constitutive part characterized in that it is formed by a sintered object made from a moulded object essentially comprising a matrix of zirconia oxide, 3% to 70% by weight of at least one stabiliser selected from the group of oxides comprising yttrium oxide, magnesium oxide, cerium oxide and calcium oxide, and a pigment formed by cobalt oxide and iron oxide powder, or by spinel CoFe₂O₄ powder to the exclusion of any other pigments, said pigment representing 1 to 10% by weight.

8. Black zirconia-based part according to claim 7 characterized in that it comprises between 2 and 5% cobalt oxide and iron oxide, or spinel CoFe₂O₄ powder.

9. Black zirconia-based part according to claim 7 or 8 characterized in that it is obtained according to any one of claims 1 to 6.

## Patentansprüche

1. Verfahren zur Herstellung von schwarzen Bestandteilen von Armbanduhren auf Basis von Zirkon, dadurch gekennzeichnet, daß es aufeinanderfolgende Schritte umfaßt, die daraus bestehen, eine erste Mischung zu realisieren, die ein Zirkonpulver, 3 bis 70 Gewichts-% eines Stabilisators, der aus einer Gruppe von Oxiden umfassend Yttriumoxid, Magnesiumoxid, Ceroxid und Calciumoxid ausgewählt ist, 1 bis 10 Gewichts-% eines Pigments, das aus einer Gruppe ausgewählt ist, die einerseits aus einem Pulver aus Kobaltoxid und Eisenoxid und andererseits aus einem Pulver aus Spinell CoFe₂O₄ unter Ausschluß sämtlicher anderer Pigmente gebildet ist, umfaßt, eine zweite Mischung zu realisieren, die diese erste Mischung und ein Bindemittel umfaßt, eine körnige Mischung durch Vornahme einer Granulation der zweiten Mischung zu realisieren einen Rohling zu bilden, indem dieser zweiten körnigen Mischung die Form des gewünschten Artikels gegeben wird, den Rohling für mindestens 30 Minuten bei einer Temperatur unterhalb von 1400°C, wenn das Pigment ein Pulver aus Kobaltoxid und Eisenoxid ist, und unterhalb von 1600°C, wenn das Pigment ein Pulver von Spinell CoFe₂O₄ ist, zu sintern und den gesinterten Rohling zu polieren.

2. Verfahren zur Herstellung nach Anspruch 1, dadurch gekennzeichnet, daß die erste Mischung 2 bis 5 Gewichts-% des Pigments umfaßt.

3. Verfahren zur Herstellung nach Anspruch 2, dadurch gekennzeichnet, daß das Pigment aus Kobaltoxid und Eisenoxid besteht und aus 25 bis 50 % und vorzugsweise aus 32 bis 38 % Kobaltoxid besteht.

4. Verfahren zur Herstellung nach Anspruch 2, dadurch gekennzeichnet, daß das Pigment aus einem Pulver aus Spinell CoFe₂O₄ besteht.

5. Verfahren zur Herstellung nach einem der vorhergehenden Ansprüche, dadurch gekennzeichnet, daß der Stabilisator Yttriumoxid ist.

6. Verfahren zur Herstellung nach einem der vorhergehenden Ansprüche, dadurch gekennzeichnet, daß die Sintertemperatur gleich oder größer als 1100°C ist und vorzugsweise zwischen 1300 und 1400°C beträgt.

7. Schwarzer Bestandteil einer Armbanduhr auf Basis von Zirkon, dadurch gekennzeichnet, daß es aus einem Sinterteil ausgehend von einem Formteil, das im wesentlichen eine Matrix aus Zirkonoxid, 3 bis 70 Gewichts-% wenigstens eines Stabilisators ausgewählt aus der Gruppe von Oxiden umfassend Yttriumoxid, Magnesiumoxid, Ceroxid und Calciumoxid, und ein Pigment, das aus einem Pulver aus Kobaltoxid und Eisenoxid oder einem Pulver aus Spinell CoFe₂O₄ unter Ausschluß sämtlicher anderer Pigmente besteht, wobei das Pigment 1 bis 10 Gewichts-% ausmacht, umfaßt, gebildet ist.

8. Schwarzes Teil auf Basis von Zirkon nach Anspruch 7, dadurch gekennzeichnet, daß es zwischen 2 und 5 % von Kobaltoxid und Eisenoxid oder eines Pulvers aus Spinell CoFe₂O₄ umfaßt.

9. Schwarzes Teil auf Basis von Zirkon nach Anspruch 7 oder 8, dadurch gekennzeichnet, daß es gemäß einem der Ansprüche 1 bis 6 erhalten ist.
